# EUROPEAN PATENT APPLICATION

(11) **EP 4 518 449 A1**
(43) Date of publication of application: **05.03.2025**
(21) Application number: 23795415.1
(22) Date of filing: 25.04.2023
(51) Int. Cl.: H04W 52/02, H04W 28/16

(54) **INFORMATION TRANSMISSION METHOD, APPARATUS, AND NETWORK DEVICE**

(30) Priority: 29.04.2022 CN 202210475915
(71) Applicant: Datang Mobile Communications Equipment Co., Ltd., Beijing 100085 (CN)
(72) Inventor: ZHANG, Dajun, Beijing 100085 (CN)
(74) Representative: Maiwald GmbH
(86) International application number: PCT/CN2023/090598
(87) International publication number: WO 2023/207983

(57) **Abstract**

The present disclosure provide information transmission method, device and network apparatus. The method includes: transmitting, by a first network node, first information to at least one second network node, wherein the first information indicates the energy-saving state level information of the first network node, or instructs the at least one second network node to enter an energy-saving state and indicates the energy-saving state level information of the second network node.

## Description

### CROSS-REFERENCE TO RELATED APPLICATION

The present application claims priority to the Chinese patent application No. 202210475915.2 filed on April 29, 2022, a disclosure of which is incorporated herein by reference in its entirety.

### TECHNICAL FIELD

The present disclosure relates to the field of communications technologies, in particular to an information transmission method, device and network apparatus.

### BACKGROUND

Network energy saving is of great significance for environmental sustainability and operational cost savings. With the proliferation of Fifth Generation Mobile Communication Technology (5G) across various industries and geographic regions, handling more advanced services and applications requires extremely high data rates. Networks are becoming denser, using more antennas, and involving larger bandwidths and frequency bands. The environmental impact of 5G needs to be controlled such that when network node load is relatively light, nodes can enter an energy-saving state. However, in such energy-saving states, certain areas might lack signal coverage, preventing communication devices from timely connectivity. Consequently, existing energy-saving solutions face challenges in balancing energy efficiency with timely communication in related technologies.

### SUMMARY

Embodiments of the present disclosure provide information transmission method, device and network apparatus, to solve the problem in related technologies where energy-saving solutions struggle to balance energy efficiency with timely communication.

To achieve the above objective, the present disclosure provides an information transmission method, comprising:
transmitting, by a first network node, first information to at least one second network node, wherein the first information indicates the energy-saving state level information of the first network node, or instructs the at least one second network node to enter an energy-saving state and indicates the energy-saving state level information of the second network node.

Optionally, the method of the present embodiment further includes:
in a case that the first network node receives energy-saving state level information from a third network node, performing coverage compensation operations based on the energy-saving state level information of the third network node;
wherein the coverage compensation operation includes covering areas that are not covered by signals from the third network node.

Optionally, the method of the present embodiment further includes:
transmitting first energy-saving state level change information to at least one second network node when the energy-saving state level information of the first network node is changed.

Optionally, the method of the present embodiment further includes:
determining that the energy-saving state level information of the first network node is changed when the energy-saving condition met by the first network node is changed.

Optionally, the method of the present embodiment further includes:
receiving first response information corresponding to the first energy-saving state level change information.

Optionally, the method of the present embodiment further includes:
transmitting second energy-saving state level change information to the second network node when the energy-saving condition met by the second network node is changed.

Optionally, the method of the present embodiment further includes:
receiving second response information corresponding to the second energy-saving state level change information.

Optionally, at least one of the first network node and the second network node is a distributed network node.

Optionally, the method of the present embodiment further includes:
receiving third response information corresponding to the first information.

Optionally, the energy-saving conditions relate to at least one of the following aspects of the network node:
service load;
energy-saving strategy;
service transmission information.

Optionally, the level information includes one of the following:
a first level energy-saving state where all devices of the network node is in an active or working state;
a second level energy-saving state where a first portion of devices of the network node is off or in sleep mode, the number of the first portion of devices being less than a first preset threshold;
a third level energy-saving state where a second portion of devices of the network node is off or in sleep mode, the number of the second portion of devices being greater than or equal to the first preset threshold and less than a second preset threshold;
a fourth level energy-saving state where a third portion of devices of the network node is off or in sleep mode, the number of the third portion of devices being greater than or equal to the second preset threshold and less than a third preset threshold;
a fifth level energy-saving state where the cell associated with the network node is in a listening state;
a sixth level energy-saving state where all devices of the network node are off or in a sleep state.

Embodiments of the present disclosure also provide an information transmission method, comprising:
receiving, by a second network node, first information transmitted by the first network node, where the first information is used to indicate the energy-saving state level information of the first network node, or instructs at least one second network node to enter an energy-saving state and indicates the energy-saving state level information.

Optionally, after the second network node receives the first information transmitted by the first network node, the method further includes:
performing coverage compensation operations by the second network node based on the energy-saving state level information of the first network node; wherein the coverage compensation operation includes covering areas that are not covered by signals from the first network node.

Optionally, the method further includes:
receiving first energy-saving state level change information transmitted by the first network node, wherein the first energy-saving state level change information indicates a change in the energy-saving state level information of the first network node; or,
receiving second energy-saving state level change information transmitted by the first network node, and switching between different levels of energy-saving states based on the second energy-saving state level change information.

Optionally, the method further includes:
transmitting first response information corresponding to the first energy-saving state level change information; or,
transmitting second response information corresponding to the second energy-saving state level change information.

Optionally, after the second network node receives the first information transmitted by the first network node, the method further includes:
transmitting third response information corresponding to the first information.

Embodiments of the present disclosure further provide an information transmission device, applied to the first network node, including a memory, a transceiver and a processor, wherein
the memory is configured to store a computer program, the transceiver is configured to transmit and receive data under the control of the processor, and the processor is configured to read the computer program in the memory to implement following steps:
transmitting, by the transceiver, first information to at least one second network node, wherein the first information indicates the energy-saving state level information of the first network node, or instructs the at least one second network node to enter an energy-saving state and indicates the energy-saving state level information of the second network node.

Optionally, the processor is further configured to read the computer program to implement:
in a case that the first network node receives energy-saving state level information from a third network node, performing coverage compensation operations based on the energy-saving state level information of the third network node;
wherein the coverage compensation operation includes covering areas that are not covered by signals from the third network node.

Optionally, the processor is further configured to read the computer program to implement:
transmitting, by the transceiver, first energy-saving state level change information to at least one second network node when the energy-saving state level information of the first network node is changed.

Optionally, the processor is further configured to read the computer program to implement:
determining that the energy-saving state level information of the first network node is changed when the energy-saving condition met by the first network node is changed.

Optionally, the processor is further configured to read the computer program to implement:
receiving, by the transceiver, first response information corresponding to the first energy-saving state level change information.

Optionally, the processor is further configured to read the computer program to implement:
transmitting, by the transceiver, second energy-saving state level change information to the second network node when the energy-saving condition met by the second network node is changed.

Optionally, the processor is further configured to read the computer program to implement:
receiving, by the transceiver, second response information corresponding to the second energy-saving state level change information.

Optionally, at least one of the first network node and the second network node is a distributed network node.

Optionally, the processor is further configured to read the computer program to implement:
receiving, by the transceiver, third response information corresponding to the first information.

Optionally, the energy-saving conditions relate to at least one of the following aspects of the network node:
service load;
energy-saving strategy;
service transmission information.

Optionally, the level information includes one of the following:
a first level energy-saving state where all devices of the network node is in an active or working state;
a second level energy-saving state where a first portion of devices of the network node is off or in sleep mode, the number of the first portion of devices being less than a first preset threshold;
a third level energy-saving state where a second portion of devices of the network node is off or in sleep mode, the number of the second portion of devices being greater than or equal to the first preset threshold and less than a second preset threshold;
a fourth level energy-saving state where a third portion of devices of the network node is off or in sleep mode, the number of the third portion of devices being greater than or equal to the second preset threshold and less than a third preset threshold;
a fifth level energy-saving state where the cell associated with the network node is in a listening state;
a sixth level energy-saving state where all devices of the network node are off or in a sleep state.

Embodiments of the present disclosure further provide an information transmission device, applied to the second network node, including a memory, a transceiver and a processor, wherein
the memory is configured to store a computer program, the transceiver is configured to transmit and receive data under the control of the processor, and the processor is configured to read the computer program in the memory to implement following steps:
receiving, by the transceiver, first information transmitted by the first network node, where the first information is used to indicate the energy-saving state level information of the first network node, or instructs at least one second network node to enter an energy-saving state and indicates the energy-saving state level information.

Optionally, the processor is further configured to read the computer program to implement:
performing coverage compensation operations based on the energy-saving state level information of the first network node; wherein the coverage compensation operation includes covering areas that are not covered by signals from the first network node.

Optionally, the processor is further configured to read the computer program to implement:
receiving, by the transceiver, first energy-saving state level change information transmitted by the first network node, wherein the first energy-saving state level change information indicates a change in the energy-saving state level information of the first network node; or,
receiving second energy-saving state level change information transmitted by the first network node, and switching between different levels of energy-saving states based on the second energy-saving state level change information.

Optionally, the processor is further configured to read the computer program to implement:
transmitting, by the transceiver, first response information corresponding to the first energy-saving state level change information; or,
transmitting second response information corresponding to the second energy-saving state level change information.

Optionally, the processor is further configured to read the computer program to implement:
transmitting, by the transceiver, third response information corresponding to the first information.

Embodiments of the present disclosure also provide an information transmission device, applied to a first network node, comprising:
a first transmitting unit for transmitting first information to at least one second network node, wherein the first information indicates the energy-saving state level information of the first network node, or instructs the at least one second network node to enter an energy-saving state and indicates the energy-saving state level information of the second network node.

Embodiments of the present disclosure also provide an information transmission device, applied to a second network node, comprising:
a first receiving unit for receiving first information transmitted by the first network node, wherein the first information indicates the energy-saving state level information of the first network node, or instructs at least one second network node to enter an energy-saving state and indicates the energy-saving state level information.

An embodiment of the present disclosure further provides a processor readable storage medium storing a computer program, wherein the computer program is configured to be executed by a processor, to implement the aforementioned information transmission method.

The above technical solutions of the present disclosure have at least the following beneficial effects:

In the embodiments of the present disclosure, a first network node transmits first information to at least one second network node. The first information is used to indicate the energy-saving state level information of the first network node, or to instruct the at least one second network node to enter an energy-saving state and indicates the energy-saving state level information. In the method of the embodiments, after a network node enters a corresponding energy-saving state level, the energy consumption of the network can be significantly reduced. Furthermore, by exchanging energy-saving state level information or control information between different network nodes, network nodes can make corresponding adjustments based on the relevant information (such as level information) about the energy-saving states of other network nodes. This addresses coverage gaps and achieves optimal balance between energy saving and timely communication.

### BRIEF DESCRIPTION OF THE DRAWINGS

In order to more clearly illustrate the technical solutions in the embodiments of the present disclosure or in the related art, the following is a brief description of the drawings required for use in the description of the embodiments or related art, it is obvious that the drawings in the following description are some embodiments of the present disclosure, and other drawings can be obtained from these drawings without creative efforts for a person of ordinary skill in the art.
Figure 1 shows a structural diagram of a network system to which embodiments of the present disclosure can be applied.
Figure 2 shows a schematic flow diagrams of the information transmission method according to an embodiment of the present disclosure.
Figure 3 shows a schematic interaction diagrams of network nodes according to an embodiment of the present disclosure.
Figure 4 shows another schematic interaction diagram of network nodes according to an embodiment of the present disclosure.
Figure 5 shows another schematic flow diagrams of the information transmission method according to an embodiment of the present disclosure.
Figure 6 shows a structural block diagram of the information transmission device according to an embodiment of the present disclosure.
Figure 7 shows a schematic module diagram of the information transmission device according to an embodiment of the present disclosure.
Figure 8 shows another schematic module diagram of the information transmission device according to an embodiment of the present disclosure.

### DETAILED DESCRIPTION

The solution provided by the embodiments of the present disclosure may be applicable to multiple kinds of systems, especially a 5^{th} generation (5G) system. For example, an applicable system may be a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS) system, a worldwide interoperability for microwave access (WiMAX) system, a 5G New Radio (NR) system, or the like. All of the multiple kinds of systems include a terminal and a network device. The systems may include a core network portion as well, for example, evolved packet system (EPS), 5G system (5GS/5GC) or the like.

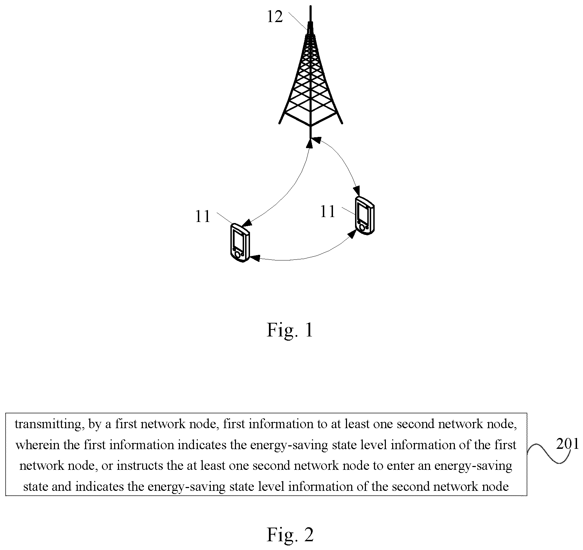

Figure 1 illustrates a block diagram of a wireless communication system to which the embodiments of the present disclosure can be applied. The wireless communication system includes a terminal 11 and a network device 12. Terminal 11 may also be referred to as a terminal device or user equipment (UE), and it can be a mobile phone, tablet personal computer, laptop computer (also known as a notebook), personal digital assistant (PDA), palmtop, netbook, ultra-mobile personal computer (UMPC), mobile internet device (MID), wearable device, vehicular UE (VUE), pedestrian UE (PUE), or other terminal-side devices. Wearable devices include items such as bracelets, earphones, and glasses. It should be noted that in the present embodiment, the specific type of terminal 11 is not limited. Network device 12 can be a base station or part of the core network, where the base station may be referred to as Node B, evolved Node B, access point, base transceiver station (BTS), radio base station, radio transceiver, basic service set (BSS), extended service set (ESS), B node, evolved B node (eNB), home B node, home evolved B node, WLAN access point, WiFi node, transmitting receiving point (TRP), or any other suitable terminology within the field. As long as the same technical effects are achieved, the term used for the base station is not restricted to specific technology-specific vocabulary. It should be noted that while this disclosure cites the base station in an NR system as an example, the specific type of base station is not limited.

The present disclosure will be described hereinafter in a clear and complete manner in conjunction with the drawings and embodiments. Obviously, the following embodiments merely relate to a part of, rather than all of, the embodiments of the present disclosure, and based on these embodiments, a person skilled in the art may, without any creative effort, obtain the other embodiments, which also fall within the scope of the present disclosure.

As shown in Figure 2, an information transmission method is provided according to an embodiment of the present disclosure.

Step 201: The first network node transmits first information to at least one second network node. The first information is used to indicate the energy-saving state level information of the first network node, or to instruct the at least one second network node to enter an energy-saving state and indicates the energy-saving state level information of the second network node.

Optionally, the first network node transmits the first information to the second network node through a network interface between the first network node and the second network node.

In the present embodiment, the energy-saving state level information can be determined based on at least one of service load, energy-saving strategy, and service transmission information. The energy-saving strategy is used to indicate which services have critical or normal communication requirements and the thresholds corresponding to the adopted energy-saving operations. The service transmission information indicates the transmission quality or performance of certain critical or normal services, which can be determined by parameters such as delay, jitter, and throughput.

As an optional implementation, the level information includes one of the following:
- First level: The energy-saving state corresponding to the first level refers to all devices of the network node being in an activated or working state;
- Second level: The energy-saving state corresponding to the second level refers to a first portion of devices of the network node being in an off or sleep state, with the number of the first portion of devices being less than a first preset threshold;
- Third level: The energy-saving state corresponding to the third level refers to a second portion of devices of the network node being in an off or sleep state, with the number of the second portion of devices being greater than or equal to the first preset threshold and less than a second preset threshold;
- Fourth level: The energy-saving state corresponding to the fourth level refers to a third portion of devices of the network node being in an off or sleep state, with the number of the third portion of devices being greater than or equal to the second preset threshold and less than a third preset threshold;
- Fifth level: The energy-saving state corresponding to the fifth level refers to that the cell corresponding to the network node is in a listening state;
- Sixth level: The energy-saving state corresponding to the sixth level indicates that all devices of the network node are turned off or in a sleep state.

In the specific embodiment of the present disclosure, the first level energy-saving state (also referred to as a fully open energy-saving state) means all devices of the network node are in an active or working state.

The second level energy-saving state (also described as a light energy-saving state) implies only a small number of energy-consuming devices are off or in a sleep state, while most energy-consuming equipment remains active or working. For example, the network cell needs to transmit downlink synchronization signals and turn on periodic pilot signals and basic system information, including the Master Information Block (MIB), System Information Block (SIB), and other necessary SIB information. However, the network cell operates on minimal bandwidth and is configured with the minimum allowed antenna ports (e.g., only one), and is configured with long system information periods. A network node in a second-level energy-saving state consumes less energy than in a first-level energy-saving state.

The third level energy-saving state (also described as a medium energy-saving state) refers to that only some energy-consuming devices are active or working. For instance, the network cell transmits downlink synchronization signals and turns on long-periodic pilot signals and transmits a few system information periodically, such as only MIB or MIB + SIB1. Additionally, the network cell operates on a minimal bandwidth, configured with minimum allowed antenna ports (e.g., only one), and sets for ultra-long system information periods. A network node in a third-level energy-saving state consumes less energy than in a second-level energy-saving state.

The fourth level energy-saving state (also described as a heavy energy-saving state) refers to that only a few energy-consuming devices are activated or working. For instance, the network cell only transmits downlink synchronization signals and/or only turns on long-periodic pilot signals, without transmitting any system information. Additionally, the network cell operates on the minimal bandwidth and is configured with the minimum allowed antenna port (e.g., only one). A network node in a fourth-level energy-saving state consumes less energy than in a third-level energy-saving state.

The fifth level energy-saving state indicates that the cell corresponding to the network device node is in a listening state, without any downlink signal transmission.

The sixth level energy-saving state (also described as a fully closed energy-saving state) indicates that all devices of the network node are turned off or in a sleep state.

In the present embodiment, the first network node and the second network node are wireless access network devices, such as base stations. Alternatively, at least one of the first network node and the second network node is a distributed network node, such as a Distributed Unit (DU) node. At least one of the first network node and the second network node may also be a terminal. For example, the first network node can be a base station and the second network node a terminal, or both the first and second network nodes can be base stations, or both can be terminals.

In the present embodiment, the first network node transmits first information to at least one second network node. The first information is used to indicate the energy-saving state level information of the first network node or to instruct the at least one second network node to enter an energy-saving state and indicates the energy-saving state level information of the second network node. The method of the present embodiment allows for significant reduction in network energy consumption after the network node enters the corresponding energy-saving state level. By exchanging energy-saving state level information or control information between different network nodes, network nodes can make corresponding adjustments based on the relevant information (such as level information) about the energy-saving states of other network nodes. This addresses coverage gaps and achieves optimal balance between energy saving and timely communication.

Optionally, the method of the present embodiment further includes:
in a case where the first network node receives the energy-saving state level information of a third network node, performing coverage compensation operations based on the energy-saving state level information of the third network node;
wherein coverage compensation operations include covering the areas not covered by signals from the third network node.

Here, if the third network node enters certain energy-saving state, the first network node can perform coverage compensation operations based on the energy-saving state information of the third network node to cover areas not covered by the third network node.

If the signal coverage area corresponding to the first network node differ from the signal coverage area corresponding to the third network node, i.e., the respective signal coverage areas do not overlap, the first network node can adjust its communications hardware structure to achieve coverage compensation, such as adjusting the angle or number of antennas, to perform coverage compensation operations, thereby covering areas not covered by the third network node in an energy-saving state and ensuring timely communication.

If there is an overlap between the signal coverage areas corresponding to the first network node and the second network node, the first network node can adjust its energy-saving strategy based on the energy-saving state information of the third network node, such as switching to a new energy-saving state level to cover areas not covered by the third network node in an energy-saving state, ensuring timely communication.

Optionally, the method of the present embodiment further includes:
in a case that the energy-saving state level information of the first network node changes, transmitting first energy-saving state level change information to at least one second network node.

Optionally, in the present embodiment, when the energy-saving condition met by the first network node changes, determining that the energy-saving state level information of the first network node has changed. For instance, if the first network node switches from a first level energy-saving state to a second level energy-saving state, the first network node transmits first energy-saving state level change information to at least one second network node to notify other network nodes of the change in its energy-saving state level. Optionally, the first energy-saving state level change information includes the level information of the new energy-saving state of the first network node after the change.

Optionally, the method of the present embodiment further includes:
receiving first response information corresponding to the first energy-saving state level change information.

In the present embodiment, after receiving the first energy-saving state level change information transmitted by the first network node, other network nodes provide feedback with first response information to indicate receipt of the first energy-saving state level change information.

Optionally, the method of the present embodiment further includes:
in a case that the energy-saving conditions met by the second network node changes, transmitting second energy-saving state level change information to the second network node.

When the first network node detects changes in the energy-saving conditions of the second network node, the first network node transmits second energy-saving state level change information to indicate the transition of the second network node's current level energy-saving state to a new level energy-saving state. For example, determining that the second network node's energy-saving conditions that correspond to the first level energy-saving state have changed to meet the second level energy-saving state conditions, thus indicating that the second network node transmits from the first-level to the second-level energy-saving state.

Additionally, in the present embodiment, if the second network node determines that the energy-saving conditions it meets have changed, the second network node can autonomously switch energy-saving states.

Optionally, the method of the present embodiment further includes:
receiving second response information corresponding to the second energy-saving state level change information.

Here, the second response information indicates whether or not the second network node successfully received the second energy-saving state level change information.

Optionally, the energy-saving conditions relate to at least one of the following aspects of the network node:
- Service load;
- Energy-saving strategy; or,
- Service transmission information.

In the present embodiment, different levels of energy-saving states correspond to different energy-saving conditions. The energy-saving conditions corresponding to different levels of energy-saving states are determined based on at least one of service load, energy-saving strategy, and service transmission information.

Optionally, the method of the present embodiment further includes:
receiving third response information corresponding to the first information.

In the present embodiment, the third response information is used to indicate whether or not the second network node successfully received the first information.

Hereinafter, the information transmission method of the present disclosure is described with specific embodiments.

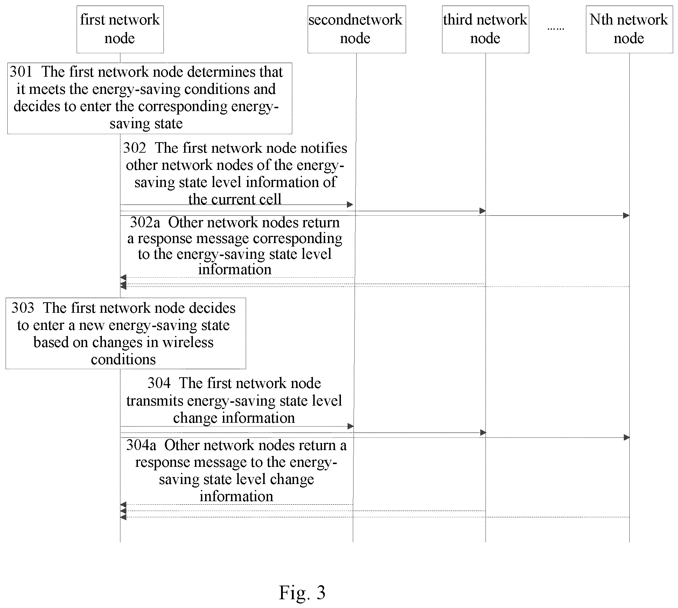

In the first embodiment of the present disclosure, as shown in Figure 3, the method includes:
Step 301: The first network node determines that it meets energy-saving conditions and decides to enter a corresponding energy-saving state.

For example, when the service load with critical/normal communication requirements in the network becomes less or zero, the energy-saving strategy may indicate which services belong to critical/normal communication requirements and the threshold for selecting a certain energy-saving operation.

Step 302: The first network node notifies other network nodes of the level information of its current cell's energy-saving state. Specifically, the level information of the energy-saving state is notified through interfaces between the first network node and other network entities. This interface can be an Xn interface or Ng interface. The other network nodes include a second network node, a network node, ..., up to the Nth network node.

Optionally, in the present embodiment, other network nodes receiving the level information may employ coverage compensation operations to solve the problem of coverage gaps.

Optionally, in Step 302a: other network nodes return response messages corresponding to the level information of the energy-saving state. Here, feedback through response messages confirms the correct transmission of the information.

Step 303: The first network node decides to enter a new energy-saving state based on changes in wireless conditions. For example, deciding to enter a new energy-saving state according to changes in load, energy-saving strategy, service transmission status, etc.

Step 304: The first network node transmits energy-saving state level change information. Here, the first network node notifies the changed level information of the energy-saving state to other network nodes through interfaces like Xn, Ng, etc., between the first network node and other network entities. Specifically, the energy-saving state change information of the current cell is notified to other network nodes.

Optionally, in Step 304a: other network nodes return response messages corresponding to energy-saving state level change information. Here, returning this response information confirms the correct transmission of the energy-saving state level change information.

In the present embodiment, the first network node transmits first information to at least one second network node, where the first information is used to indicate the level information of the energy-saving state of the first network node. Thus, after the first network node enters the energy-saving state of the corresponding level, the network energy consumption can be significantly reduced. Furthermore, By exchanging energy-saving state level information or control information between different network nodes, network nodes can make corresponding adjustments based on the relevant information (such as level information) about the energy-saving states of other network nodes. This addresses coverage gaps and achieves optimal balance between energy saving and timely communication.

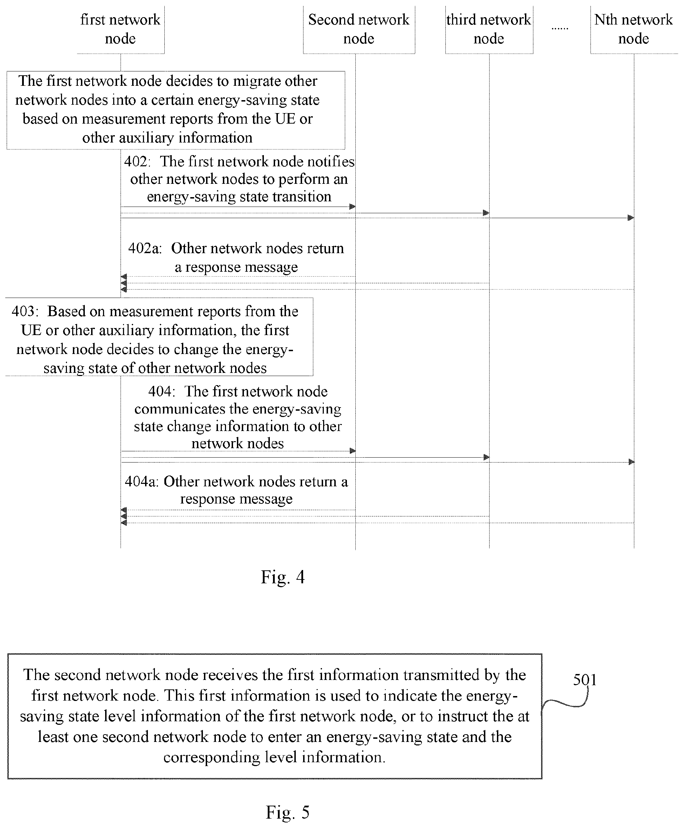

In the second embodiment of the present disclosure, as shown in Figure 4, the method includes:
Step 401: The first network node decides to migrate other network nodes into a certain energy-saving state based on the UE's measurement reports or other auxiliary information. The aforementioned auxiliary information may refer to network node load, energy-saving strategy, service transmission status, etc. The other network nodes here include the second network node, third network node, ..., up to the Nth network node.
Step 402: The first network node notifies other network nodes to undergo energy-saving state conversion. Specifically, notifications for conversion to different levels of energy-saving states are sent through interfaces between network nodes, such as Xn, Ng, etc.

Optionally, after receiving the notification of energy-saving state conversion, other network nodes can perform coverage compensation operations to address coverage gaps, ensuring timely communication.

Optionally, Step 402a: Other network nodes return response messages. Through these response messages, the first network node can determine whether the notification information for energy-saving state conversion was successfully transmitted to other network nodes.

Step 403: Based on UE's measurement reports or other auxiliary information, the first network node decides to change the energy-saving state of other network nodes.

Step 404: The first network node notifies other network nodes of the change in energy-saving states, via interfaces between other network entities (e.g., Xn, Ng), etc.

Optionally, Step 404a: Other network nodes return response messages to confirm the correct transmission of information.

It should be noted that in the above-mentioned first and second embodiments, the network nodes (including at least one of the first network node and other network nodes) can be distributed nodes, such as DU nodes. The first network node transmits the level information of the energy-saving state or the energy-saving state level change information to other network nodes through Xn, F1, E1 interfaces.

The information transmission method of the embodiments of the present disclosure allows the first network node to transmit first information to at least one second network node. The first information is used to indicate the level information of the energy-saving state of the first network node, or to instruct the at least one second network node to enter an energy-saving state and provide the level information of that energy-saving state. The method of the present embodiment allows for significant reduction in network energy consumption after the network node enters the corresponding energy-saving state level. By exchanging energy-saving state level information or control information between different network nodes, network nodes can make corresponding adjustments based on the relevant information (such as level information) about the energy-saving states of other network nodes. This addresses coverage gaps and achieves optimal balance between energy saving and timely communication.

As shown in Figure 5, the present embodiment also provides an information transmission method, including:
Step 501: The second network node receives first information transmitted by the first network node, where the first information is used to indicate the level information of the energy-saving state of the first network node, or to instruct at least one second network node to enter an energy-saving state and provide the level information of that energy-saving state.

**In** the present embodiment, exchanging level information or control information (the control information is used to control network nodes to enter the corresponding level of energy-saving state) regarding energy-saving states among different network nodes allows network nodes to make adjustments based on the related information (such as level information) about the energy-saving states of other network nodes. This addresses coverage gaps and achieves optimal balance between energy saving and timely communication.

Optionally, after the second network node receives the first information transmitted by the first network node, the method further includes:

performing coverage compensation operations by the second network node based on the energy-saving state level information of the first network node; wherein the coverage compensation operation includes covering areas that are not covered by signals from the first network node.

Optionally, the method further includes:
receiving first energy-saving state level change information transmitted by the first network node, wherein the first energy-saving state level change information indicates a change in the energy-saving state level information of the first network node; or,
receiving second energy-saving state level change information transmitted by the first network node, and switching between different levels of energy-saving states based on the second energy-saving state level change information.

Optionally, the method further includes:
transmitting first response information corresponding to the first energy-saving state level change information; or,
transmitting second response information corresponding to the second energy-saving state level change information.

Optionally, after the second network node receives the first information transmitted by the first network node, the method further includes:
transmitting third response information corresponding to the first information.

It should be noted that the method embodiment on the second network node side corresponds to the method embodiment on the first network node side as described above, and will not be repeated here.

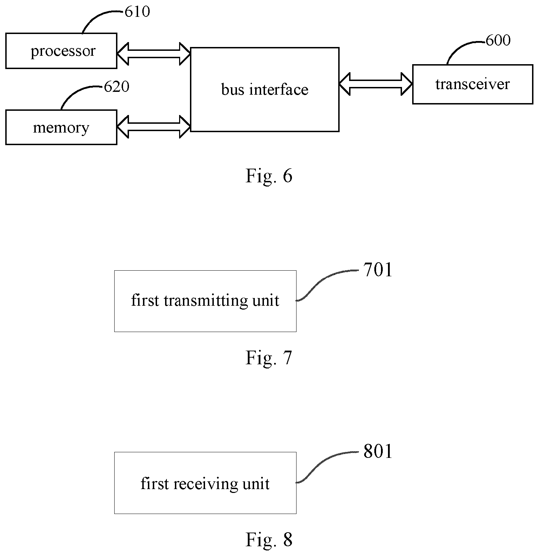

As shown in Fig. 6, embodiments of the present disclosure further provide an information transmission device, applied to the first network node, including a memory 620, a transceiver 600 and a processor 610, wherein
the memory 620 is configured to store a computer program, the transceiver 600 is configured to transmit and receive data under the control of the processor 610, and the processor 610 is configured to read the computer program in the memory to implement following steps:
transmitting, by the transceiver 600, first information to at least one second network node, wherein the first information indicates the energy-saving state level information of the first network node, or instructs the at least one second network node to enter an energy-saving state and indicates the energy-saving state level information of the second network node.

Optionally, the processor 610 is further configured to read the computer program to implement:
in a case that the first network node receives energy-saving state level information from a third network node, performing coverage compensation operations based on the energy-saving state level information of the third network node;
wherein the coverage compensation operation includes covering areas that are not covered by signals from the third network node.

Optionally, the processor 610 is further configured to read the computer program to implement:
transmitting, by the transceiver, first energy-saving state level change information to at least one second network node when the energy-saving state level information of the first network node is changed.

Optionally, the processor 610 is further configured to read the computer program to implement:
determining that the energy-saving state level information of the first network node is changed when the energy-saving condition met by the first network node is changed.

Optionally, the processor 610 is further configured to read the computer program to implement:
receiving, by the transceiver, first response information corresponding to the first energy-saving state level change information.

Optionally, the processor 610 is further configured to read the computer program to implement:
transmitting, by the transceiver, second energy-saving state level change information to the second network node when the energy-saving condition met by the second network node is changed.

Optionally, the processor 610 is further configured to read the computer program to implement:
receiving, by the transceiver, second response information corresponding to the second energy-saving state level change information.

Optionally, at least one of the first network node and the second network node is a distributed network node.

Optionally, the processor 610 is further configured to read the computer program to implement:
receiving, by the transceiver, third response information corresponding to the first information.

Optionally, the energy-saving conditions relate to at least one of the following aspects of the network node:
service load;
energy-saving strategy;
service transmission information.

Optionally, the level information includes one of the following:
a first level energy-saving state where all devices of the network node is in an active or working state;
a second level energy-saving state where a first portion of devices of the network node is off or in sleep mode, the number of the first portion of devices being less than a first preset threshold;
a third level energy-saving state where a second portion of devices of the network node is off or in sleep mode, the number of the second portion of devices being greater than or equal to the first preset threshold and less than a second preset threshold;
a fourth level energy-saving state where a third portion of devices of the network node is off or in sleep mode, the number of the third portion of devices being greater than or equal to the second preset threshold and less than a third preset threshold;
a fifth level energy-saving state where the cell associated with the network node is in a listening state;
a sixth level energy-saving state where all devices of the network node are off or in a sleep state.

In Fig. 6, a bus architecture may include any number of interconnected buses and bridges, and connects various circuits including one or more processors represented by the processor 610 and memory represented by the memory 620. The bus architecture may also connect various other circuits such as peripherals, voltage regulators and power management circuits, which is well known in the art. Therefore, a detailed description thereof is omitted herein. A bus interface provides an interface. The transceiver 600 may be multiple elements, i.e., a transmitter and a receiver, to allow for communication with various other apparatuses on the transmission medium. These transmission media include wireless channel, wired channel, optic fiber or the like. The processor 610 is responsible for supervising the bus architecture and normal operation and the memory 620 may store the data being used by the processor 610 during operation.

Optionally, the processor 610 may be a central processing unit (CPU), an application specific integrated circuit (ASIC), a field-programmable gate array (FPGA) or a complex programmable logic device (CPLD). The processor may also adopt a multi-core architecture.

It should be noted here that the above-mentioned terminal provided by the embodiments of the present disclosure can implement all the method steps implemented by the above-mentioned embodiment of the method performed by the terminal, and can achieve the same technical effect. Parts and beneficial effects in this embodiment that are the same as those in the method embodiment will not be described in detail here.

As shown in Fig. 6, embodiments of the present disclosure also provide an information transmission device, applied to a second network node, including a memory, a transceiver and a processor, wherein
the memory is configured to store a computer program, the transceiver is configured to transmit and receive data under the control of the processor, and the processor is configured to read the computer program in the memory to implement following steps:
receiving, by the transceiver, first information transmitted by the first network node, where the first information is used to indicate the energy-saving state level information of the first network node, or instructs at least one second network node to enter an energy-saving state and indicates the energy-saving state level information.

Optionally, the processor is further configured to read the computer program to implement:
performing coverage compensation operations based on the energy-saving state level information of the first network node; wherein the coverage compensation operation includes covering areas that are not covered by signals from the first network node.

Optionally, the processor is further configured to read the computer program to implement:
receiving, by the transceiver, first energy-saving state level change information transmitted by the first network node, wherein the first energy-saving state level change information indicates a change in the energy-saving state level information of the first network node; or,
receiving second energy-saving state level change information transmitted by the first network node, and switching between different levels of energy-saving states based on the second energy-saving state level change information.

Optionally, the processor is further configured to read the computer program to implement:
transmitting, by the transceiver, first response information corresponding to the first energy-saving state level change information; or,
transmitting second response information corresponding to the second energy-saving state level change information.

Optionally, the processor is further configured to read the computer program to implement:
transmitting, by the transceiver, third response information corresponding to the first information.

It should be noted here that the above-mentioned terminal provided by the embodiments of the present disclosure can implement all the method steps implemented by the above-mentioned embodiment of the method performed by the terminal, and can achieve the same technical effect. Parts and beneficial effects in this embodiment that are the same as those in the method embodiment will not be described in detail here.

As shown in Fig. 7, embodiments of the present disclosure also provide an information transmission device, applied to a first network node, comprising:
a first transmitting unit 701, for transmitting first information to at least one second network node, wherein the first information indicates the energy-saving state level information of the first network node, or instructs the at least one second network node to enter an energy-saving state and indicates the energy-saving state level information of the second network node.

Optionally, the information transmission device further includes a first processing unit, configured for:
in a case that the first network node receives energy-saving state level information from a third network node, performing coverage compensation operations based on the energy-saving state level information of the third network node;
wherein the coverage compensation operation includes covering areas that are not covered by signals from the third network node.

Optionally, the information transmission device further includes a second transmitting unit, configured for:
transmitting, by the transceiver, first energy-saving state level change information to at least one second network node when the energy-saving state level information of the first network node is changed.

Optionally, the information transmission device further includes a first determining unit, configured for:
determining that the energy-saving state level information of the first network node is changed when the energy-saving condition met by the first network node is changed.

Optionally, the information transmission device further includes a second receiving unit, configured for:
receiving, by the transceiver, first response information corresponding to the first energy-saving state level change information.

Optionally, the information transmission device further includes a third transmitting unit, configured for:
transmitting, by the transceiver, second energy-saving state level change information to the second network node when the energy-saving condition met by the second network node is changed.

Optionally, the information transmission device further includes a third receiving unit, configured for:
receiving, by the transceiver, second response information corresponding to the second energy-saving state level change information.

Optionally, at least one of the first network node and the second network node is a distributed network node.

Optionally, the information transmission device further includes a fourth receiving unit, configured for:
receiving, by the transceiver, third response information corresponding to the first information.

Optionally, the energy-saving conditions relate to at least one of the following aspects of the network node:
service load;
energy-saving strategy;
service transmission information.

It should be noted here that the above-mentioned terminal provided by the embodiments of the present disclosure can implement all the method steps implemented by the above-mentioned embodiment of the method performed by the terminal, and can achieve the same technical effect. Parts and beneficial effects in this embodiment that are the same as those in the method embodiment will not be described in detail here.

As shown in Fig. 8, embodiments of the present disclosure also provide an information transmission device, applied to a second network node, including:
a first receiving unit 801 for receiving first information transmitted by the first network node, wherein the first information indicates the energy-saving state level information of the first network node, or instructs at least one second network node to enter an energy-saving state and indicates the energy-saving state level information.

Optionally, the information transmission device further includes a second processing unit, configured for:
performing coverage compensation operations based on the energy-saving state level information of the first network node; wherein the coverage compensation operation includes covering areas that are not covered by signals from the first network node.

Optionally, the information transmission device further includes a fifth receiving unit, configured for:
receiving, by the transceiver, first energy-saving state level change information transmitted by the first network node, wherein the first energy-saving state level change information indicates a change in the energy-saving state level information of the first network node; or,
receiving second energy-saving state level change information transmitted by the first network node, and switching between different levels of energy-saving states based on the second energy-saving state level change information.

Optionally, the information transmission device further includes a fourth transmitting unit, configured for:
transmitting, by the transceiver, first response information corresponding to the first energy-saving state level change information; or,
transmitting second response information corresponding to the second energy-saving state level change information.

Optionally, the information transmission device further includes a fifth transmitting unit, configured for:
transmitting, by the transceiver, third response information corresponding to the first information.

It should be noted here that the above-mentioned terminal provided by the embodiments of the present disclosure can implement all the method steps implemented by the above-mentioned embodiment of the method performed by the terminal, and can achieve the same technical effect. Parts and beneficial effects in this embodiment that are the same as those in the method embodiment will not be described in detail here.

It should be noted that the division of units in the embodiments of the present disclosure is illustrative, and is only a logical function division, and there may be another division method in actual implementation. In addition, the functional units in various embodiments of the present disclosure may be integrated into one processing unit, or each unit may exist separately physically, or two or more units may be integrated into one unit. The above-mentioned integrated units can be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute all or part of the steps of the methods described in the various embodiments of the present disclosure. The aforementioned storage media include: a universal serial bus (USB) flash drive, removable hard disk, read-only memory (ROM), random access memory (RAM), magnetic disk, optical disc or other media that can store program codes.

An embodiment of the present disclosure further provides a processor readable storage medium storing a computer program, wherein the computer program is configured to be executed by a processor, to implement the following steps:
transmitting, by a first network node, first information to at least one second network node, wherein the first information indicates the energy-saving state level information of the first network node, or instructs the at least one second network node to enter an energy-saving state and indicates the energy-saving state level information of the second network node.

Or, receiving, by a second network node, first information transmitted by the first network node, where the first information is used to indicate the energy-saving state level information of the first network node, or instructs at least one second network node to enter an energy-saving state and indicates the energy-saving state level information.

The terminal involved in the embodiments of the present disclosure is a device for providing voice data and/or any other service data to a user, e.g., a handheld device having a wireless connection function, or any other processing device capable of being connected to a wireless modem. In different systems, the terminal device may have different names. For example, in a 5G system, the terminal device is called as UE. A wireless terminal device communicates with one or more Core Networks (CNs) via a Radio Access Network (RAN). The wireless terminal device may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal device may be a Personal Communication Service (PCS) telephone, a cordless telephone, a Session Initiation Protocol (SIP) phone, a Wireless Local Loop (WLL) station, a Personal Digital Assistant (PDA), a Reduced Capability (Redcap) terminal, a smart appliance terminal, a vehicle-mounted terminal or a robot. In addition, the wireless terminal device may also be called as system, subscriber unit, subscriber station, mobile station, mobile, remote station, remote terminal, access terminal, user terminal, user agent or user device, which will not be particularly defined herein.

The network device involved in the embodiments of the present application may be a base station, and the base station may have multiple cells providing services for terminals. According to different application scenarios, the base station may also be referred to as an access point, or may be a device in an access network that communicates with wireless terminals through one or more sectors on air interfaces, or may have other names. The network device may be configured to exchange received air frames and Internet protocol (Internet Protocol, IP) packets, serving as a router between the wireless terminals and rest of the access network, where the rest of the access network may include an Internet Protocol (IP) communication network. The network device may also coordinate attribute management of air interfaces. For example, the network device involved in the embodiments of this application may be a network device(Base Transceiver Station, BTS) in a global system for mobile communications (Global System for Mobile Communications, GSM) or a code division multiple access (Code Division Multiple Access, CDMA), or may be a network device (NodeB) in wide-band code division multiple access (Wide-band Code Division Multiple Access, WCDMA), or may be an evolutional network device (evolutional Node B, eNB or e-NodeB) in a long term evolution (Long Term Evolution, LTE) system or a 5G base station (gNB) in a 5G network architecture (next generation system), or may be a home evolved node B (Home evolved Node B, HeNB),a relay node (relay node), a femto (femto), a pico (pico), etc., which is not limited in the embodiments of this application. In some network structures, the network device may include a centralized unit (centralized unit, CU) node and a distributed unit (distributed unit, DU) node, and the centralized unit and the distributed unit may be geographically separated.

Multi Input Multi Output (MIMO) transmission is performed between the satellite and the terminal each with one or more antennae, and the MIMO transmission is Single User MIMO (SU-MIMO) or Multiple User MIMO (MU-MIMO). Depending on the form of an antenna combination and the quantity of antennae, the MIMO transmission may be two-dimensional MIMO (2D-MIMO), three-dimensional MIMO (3D-MIMO), Full Dimension MIMO (FD-MIMO) or massive-MIMO, and it may also be diversity transmission, precoding transmission or beam-forming transmission.

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being executed by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

It should be further appreciated that, the above modules in the network device and the UE are divided merely on the basis of their logic functions, and in actual use, they may be completely or partially integrated into a physical entity, or physically separated from each other. These modules may be implemented by calling software through a processing element, or implemented in the form of hardware. For example, the determination module may be a processing element arranged separately, or integrated into a chip of the above-mentioned device. In addition, the determination module may be stored in the memory of the above-mentioned device in the form of a program code, and may be called and executed by a processing element of the above-mentioned device so as to achieve the above functions. The other modules may be implemented in a similar manner. All or parts of the modules may be integrated together or arranged separately. Here, the modules, units or assemblies may each of an Integrated Circuit (IC) having a signal processing capability. During the implementation, the steps of the method or the modules may be implemented through an integrated logic circuit of the processing element in the form of hardware or through instructions in the form of software.

For example, the above modules, units, sub-units or sub-modules may be one or more ICs capable of implementing the above-mentioned method, e.g., one or more Application Specific Integrated Circuits (ASICs), one or more Digital Signal Processors (DSPs), or one or more Field Programmable Gate Array (FPGA). For another example, when a certain module is implemented by calling a program code through a processing element, the processing element may be a general-purpose processor, e.g., a Central Processing Unit (CPU) or any other processor capable of calling the program code. These modules may be integrated together and implemented in the form of system-on-a-chip (SOC).

Such words as "first" and "second" involved in the specification and the appended claims are merely used to differentiate different objects rather than to represent any specific order. It should be appreciated that, the data used in this way may be replaced with each other, so as to implement the embodiments in an order other than that shown in the drawings or described in the specification. In addition, such terms as "include" or "including" or any other variations involved in the present disclosure intend to provide non-exclusive coverage, so that a procedure, method, system, product or device including a series of steps or units may also include any other elements not listed herein, or may include any inherent steps or units of the procedure, method, system, product or device. The expression "and/or" in the description and the appended claims is merely used to represent at least one of the objects before and after the expression. For example, "A and/or B and/or C" represents seven situations, i.e., there is only A, there is only B, there is only C, there are both A and B, there are both B and C, there are both A and C, and there are A, B and C. Similarly, the phrase "at least one of A or B" in the specification and the appended claims shall be understood as "there is only A, there is only B, or there are both A and B".

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. An information transmission method, comprising:
transmitting, by a first network node, first information to at least one second network node, wherein the first information indicates the energy-saving state level information of the first network node, or instructs the at least one second network node to enter an energy-saving state and indicates the energy-saving state level information of the second network node.

2. The information transmission method according to claim 1, further comprising:
in a case that the first network node receives energy-saving state level information from a third network node, performing coverage compensation operations based on the energy-saving state level information of the third network node;
wherein the coverage compensation operation includes covering areas that are not covered by signals from the third network node.

3. The information transmission method according to claim 1, further comprising:
transmitting first energy-saving state level change information to at least one second network node when the energy-saving state level information of the first network node is changed.

4. The information transmission method according to claim 3, further comprising:
determining that the energy-saving state level information of the first network node is changed when the energy-saving condition met by the first network node is changed.

5. The information transmission method according to claim 3, further comprising:
receiving first response information corresponding to the first energy-saving state level change information.

6. The information transmission method according to claim 1, further comprising:
transmitting second energy-saving state level change information to the second network node when the energy-saving condition met by the second network node is changed.

7. The information transmission method according to claim 6, further comprising:
receiving second response information corresponding to the second energy-saving state level change information.

8. The information transmission method according to claim 1, wherein at least one of the first network node and the second network node is a distributed network node.

9. The information transmission method according to claim 1, further comprising:
receiving third response information corresponding to the first information.

10. The information transmission method according to claim 4 or 6, wherein the energy-saving conditions relate to at least one of the following:
service load;
energy-saving strategy; or,
service transmission information.

11. The information transmission method according to claim 1, wherein the level information includes one of the following:
a first level energy-saving state where all devices of the network node is in an active or working state;
a second level energy-saving state where a first portion of devices of the network node is off or in sleep mode, the number of the first portion of devices being less than a first preset threshold;
a third level energy-saving state where a second portion of devices of the network node is off or in sleep mode, the number of the second portion of devices being greater than or equal to the first preset threshold and less than a second preset threshold;
a fourth level energy-saving state where a third portion of devices of the network node is off or in sleep mode, the number of the third portion of devices being greater than or equal to the second preset threshold and less than a third preset threshold;
a fifth level energy-saving state where the cell associated with the network node is in a listening state; or,
a sixth level energy-saving state where all devices of the network node are off or in a sleep state.

12. An information transmission method, comprising:
receiving, by a second network node, first information transmitted by the first network node, where the first information is used to indicate the energy-saving state level information of the first network node, or instructs at least one second network node to enter an energy-saving state and indicates the energy-saving state level information.

13. The information transmission method according to claim 12, wherein after the second network node receives the first information transmitted by the first network node, the method further comprises:
performing coverage compensation operations by the second network node based on the energy-saving state level information of the first network node;
wherein the coverage compensation operation includes covering areas that are not covered by signals from the first network node.

14. The information transmission method according to claim 12, further comprising:
receiving first energy-saving state level change information transmitted by the first network node, wherein the first energy-saving state level change information indicates a change in the energy-saving state level information of the first network node; or,
receiving second energy-saving state level change information transmitted by the first network node, and switching between different levels of energy-saving states based on the second energy-saving state level change information.

15. The information transmission method according to claim 14, further comprising:
transmitting first response information corresponding to the first energy-saving state level change information; or,
transmitting second response information corresponding to the second energy-saving state level change information.

16. The information transmission method according to claim 12, wherein after the second network node receives the first information transmitted by the first network node, the method further comprises:
transmitting third response information corresponding to the first information.

17. An information transmission device, applied to the first network node, comprising a memory, a transceiver and a processor, wherein
the memory is configured to store a computer program, the transceiver is configured to transmit and receive data under the control of the processor, and the processor is configured to read the computer program in the memory to implement following steps:
transmitting, by the transceiver, first information to at least one second network node, wherein the first information indicates the energy-saving state level information of the first network node, or instructs the at least one second network node to enter an energy-saving state and indicates the energy-saving state level information of the second network node.

18. The device according to claim 17, wherein the processor is further configured to read the computer program to implement:
in a case that the first network node receives energy-saving state level information from a third network node, performing coverage compensation operations based on the energy-saving state level information of the third network node;
wherein the coverage compensation operation comprises covering areas that are not covered by signals from the third network node.

19. The device according to claim 17, wherein the processor is further configured to read the computer program to implement:
transmitting, by the transceiver, first energy-saving state level change information to at least one second network node when the energy-saving state level information of the first network node is changed.

20. The device according to claim 19, wherein the processor is further configured to read the computer program to implement:
determining that the energy-saving state level information of the first network node is changed when the energy-saving condition met by the first network node is changed.

21. The device according to claim 19, wherein the processor is further configured to read the computer program to implement:
receiving, by the transceiver, first response information corresponding to the first energy-saving state level change information.

22. The device according to claim 17, wherein the processor is further configured to read the computer program to implement:
transmitting, by the transceiver, second energy-saving state level change information to the second network node when the energy-saving condition met by the second network node is changed.

23. The device according to claim 22, wherein the processor is further configured to read the computer program to implement:
receiving, by the transceiver, second response information corresponding to the second energy-saving state level change information.

24. The device according to claim 17, wherein at least one of the first network node and the second network node is a distributed network node.

25. The device according to claim 17, wherein the processor is further configured to read the computer program to implement:
receiving, by the transceiver, third response information corresponding to the first information.

26. The device according to claim 20 or 22, wherein the energy-saving conditions relate to at least one of the following:
service load;
energy-saving strategy; or,
service transmission information.

27. An information transmission device, applied to the first network node, comprising a memory, a transceiver and a processor, wherein
the memory is configured to store a computer program, the transceiver is configured to transmit and receive data under the control of the processor, and the processor is configured to read the computer program in the memory to implement following steps:
receiving, by the transceiver, first information transmitted by the first network node, wherein the first information is used to indicate the energy-saving state level information of the first network node, or instructs at least one second network node to enter an energy-saving state and indicates the energy-saving state level information.

28. The device according to claim 27, wherein the processor is further configured to read the computer program to implement:
performing coverage compensation operations based on the energy-saving state level information of the first network node;
wherein the coverage compensation operation includes covering areas that are not covered by signals from the first network node.

29. The device according to claim 27, wherein the processor is further configured to read the computer program to implement:
receiving, by the transceiver, first energy-saving state level change information transmitted by the first network node, wherein the first energy-saving state level change information indicates a change in the energy-saving state level information of the first network node; or,
receiving second energy-saving state level change information transmitted by the first network node, and switching between different levels of energy-saving states based on the second energy-saving state level change information.

30. The device according to claim 29, wherein the processor is further configured to read the computer program to implement:
transmitting, by the transceiver, first response information corresponding to the first energy-saving state level change information; or,
transmitting second response information corresponding to the second energy-saving state level change information.

31. The device according to claim 27, wherein the processor is further configured to read the computer program to implement:
transmitting, by the transceiver, third response information corresponding to the first information.

32. An information transmission device, applied to a first network node, comprising:
a first transmitting unit for transmitting first information to at least one second network node, wherein the first information indicates the energy-saving state level information of the first network node, or instructs the at least one second network node to enter an energy-saving state and indicates the energy-saving state level information of the second network node.

33. An information transmission device, applied to a second network node, comprising:
a first receiving unit for receiving first information transmitted by the first network node, wherein the first information indicates the energy-saving state level information of the first network node, or instructs at least one second network node to enter an energy-saving state and indicates the energy-saving state level information.

34. A processor readable storage medium storing a computer program, wherein the computer program is configured to be executed by a processor to implement the information transmission method according to any one of claims 1 to 11, or implement the information transmission method according to any one of claims 12 to 16.
